# EUROPÄISCHE PATENTANMELDUNG

(11) **EP 0 957 303 A2**
(43) Veröffentlichungstag der Anmeldung: **17.11.1999**
(21) Anmeldenummer: 99107464.2
(22) Anmeldetag: 28.04.1999
(51) Int. Cl.: F16L 11/16, F16L 27/107, F01N 7/08

(54) **Agraffschlauch für Abgasanlagen von Kraftfahrzeugen**

(30) Priorität: 14.05.1998 DE 19821596
(71) Anmelder: Witzenmann GmbH Metallschlauch-Fabrik Pforzheim, D-75175 Pforzheim (DE)
(72) Erfinder: Krawietz, Tom, 75217 Birkenfeld (DE); Pluschke, Michael, 75305 Neuenbürg-Rotenbach (DE)
(74) Vertreter: Blumenröhr, Dietrich Dipl.-Ing.

(57) **Zusammenfassung**

Es wird ein Agraffschlauch für Abgasanlagen vorgeschlagen, der schraubengangförmig gewickelt ist aus wenigstens einem S-förmig vorgeformten Metallband, wobei der Schlauch mit radialen, benachbarte Falzlagen partiell in gegenseitiger Anlage bringenden Einprägungen versehen ist.

## Beschreibung

Die Erfindung betrifft einen Agraffschlauch insbesondere für Abgasanlagen von Kraftfahrzeugen, schraubengangförmig gewickelt aus wenigstens einem S-förmig vorgeformten ein- oder mehrlagigen Metallband, wobei die Bandkanten benachbarter Bandwindungen miteinander verfalzt sind über ihre durch die S-Haken der Vorform gebildeten Schenkel und endständigen Falzborde.

Herkömmliche Agraffschläuche sind insbesondere in zwei verschiedenen Arten erhältlich, nämlich mit kreisrundem Querschnitt und mit polygonalem Querschnitt. Während sich die Agraffschläuche mit kreisrundem Querschnitt durch eine besonders gute Dichtigkeit auszeichnen, besitzen sie den Nachteil, daß der Schlauch dazu neigt, sich aufzudrehen, also entgegen der Wicklung wieder aufzuspringen, weshalb benachbarte Falzlagen in geeigneter Weise aneinander festgelegt werden müssen. Dies erfolgt beispielsweise gemäß EP 0 523 341 durch eine parallel zur Schlauchachse angeordnete von radial innen nach radial außen eingedrückte Sicke.

Die Agraffschläuche mit polygonalem Querschnitt weisen zwar eine nicht so gute Dichtigkeit auf, besitzen aber den großen Vorteil, daß deren Steifigkeit und somit deren Fähigkeit zur Schwingungsentkopplung hieran angeschlossener Leitungsteile dadurch sehr genau eingestellt werden kann, daß der Schlauch unterschiedlich straff gewickelt wird. Die Polygonkanten sorgen hierbei dafür, daß der Agraffschlauch seine vorgegebene Form und Wicklung behält und keine wesentliche Neigung zum Aufdrehen aufweist.

Die beschriebenen Agraffschläuche werden sowohl einzeln als Abgasleitung insbesondere für Lkw's wie auch insbesondere für Abgasleitungen bei sonstigen Kfz-Anwendungen als Liner zusammen mit einem den Schlauch umgebenden Metallbalg verwendet, wobei in letzterem Fall der Metallbalg für die Abdichtung der Abgasleitung sorgt.

Bei der Anwendung in Kfz-Abgasanlagen werden wegen der besseren Einstellbarkeit der Schlauchsteifigkeit die Agraffschläuche mit polygonalem Querschnitt bevorzugt, wobei es je nach Einbauverhältnissen und Einbauposition des an den Agraffschlauch angeschlossenen Kfz-Motors erforderlich sein kann, daß der Agraffschlauch zur Minimierung seiner Steifigkeit und demgemäß zur größtmöglichen Schwingungsentkopplung sehr lose gewickelt ist. Hierdurch neigt er beim Betrieb dadurch zu Geräuschentwicklungen, daß er zum einen so weit ausgelenkt wird, bis er gegen den etwaig sich koaxial erstreckenden Balg schlägt, und daß zum anderen die mit Spiel nebeneinander liegenden Falzlagen, also die in einem Falz zusammengefaßten Schenkel und Falzborde, aneinanderschlagen. Zur Vermeidung dieser Geräuschentwicklung behilft man sich derzeit damit, zwischen Agraffschlauch und Balg eine Dämpfungseinlage beispielsweise aus einem Gestricke vorzusehen, die den gegenseitigen Kontakt von Schlauch und Balg verhindern soll und zum anderen den Schlauch in seiner Auslenkung auch derart abbremsen soll, daß die jeweils benachbarten Falzlagen schwächere Relativbewegungen durchführen.

Die einzige das Geräuschproblem vollständig beseitigende Abhilfe würde jedoch nur darin liegen, daß man den Agraffschlauch fester wickelt und hierdurch das Spiel in den Falzen und somit auch die Beweglichkeit des Schlauches reduziert; dies würde aber gleichzeitig mit einer Erhöhung der Verlustarbeit des Schlauches einhergehen, die man ja gerade durch das lose Wickeln herabsetzen wollte.

Hiervon ausgehend liegt der vorliegenden Erfindung die Aufgabe zugrunde, einen Agraffschlauch der eingangs geschilderten Art zur Verfügung zu stellen, der sich durch eine verringerte Geräuschemission bei gleichzeitiger Beibehaltung sowohl der Beweglichkeit als auch der geringen Verlustarbeit auszeichnet.

Diese Aufgabe wird für einen Agraffschlauch mit den Merkmalen des Oberbegriffes von Anspruch 1 dadurch gelöst, daß der Schlauch mit radialen, benachbarte Falzlagen partiell in gegenseitige Anlage bringenden Einprägungen versehen ist. Diese Einprägungen sind im Vergleich zu den ansonsten im Bereich der Polygonkanten aneinander liegenden Falzlagen derart klein ausgebildet, daß sie zu keiner wesentlichen Erhöhung der Verlustarbeit führen, auf der anderen Seite aber durch die partielle Aufzehrung des Spiels zwischen benachbarten, nun in ständige gegenseitige Anlage gebrachten Falzlagen das Aneinanderschlagen dieser Falzlagen verhindern, wodurch die wesentliche Geräuschquelle zuverlässig eingedämmt werden kann. Andererseits bleibt auch die Beweglichkeit der einprägungsbehafteten Schlauchbereiche voll erhalten, so daß der Schlauch nichts von seiner für die Schwingungsentkopplung der angeschlossenen Leitungsteile erforderlichen Beweglichkeit einbüßt.

Was die Positionierung der Einprägungen betrifft, so können diese einerseits auf der radialen Außenseite des Schlauchs aufgebracht sein, was insbesondere hinsichtlich des Produktionsablaufs beim Prägen und der hierdurch möglichen Variantenvielfalt der Einprägungsformen und -muster vorteilhaft ist; zum anderen können die Einprägungen auch nur oder zusätzlich auf der radialen Innenseite vorgesehen werden, was zu einem in seiner Außenansicht gegenüber einem einprägungslosen Schlauch unveränderten Schlauch führt, also die Optik des demgemäß bearbeiteten Schlauchs nicht beeinträchtigt.

Dies ist insbesondere dann von Vorteil, wenn der Agraffschlauch einen kreisrunden Querschnitt aufweist, wodurch er in seinem inneren Aufbau an einen Schlauch mit polygonalem Querschnitt angenähert werden kann, indem die Einprägungen wie Polygonkanten fungieren und beispielsweise das Aufdrehen des runden Schlauches verhindern, wobei der Schlauch aber auf seiner Außenseite den herkömmlichen kantenlosen Bauformen entspricht.

Die vorliegende Erfindung läßt sich aber insbesondere auch für Agraffschläuche mit polygonalem Querschnitt und somit insbesondere für Abgasleitungen bei Kraftfahrzeugen anwenden. Hierbei sorgen die Einprägungen dafür, daß quasi partielle zusätzliche Kanten geschaffen werden, sofern sich die Einprägungen beabstandet von den vorhandenen Polygonkanten erstrecken. Für beide Fälle gilt aber gleichermaßen, daß die Einprägungen im Gegensatz zu einer axial sich über den gesamten Schlauch erstreckenden Polygonkante nur lokal vorgesehen wird und somit die Beweglichkeit des Schlauches einerseits nicht wesentlich beeinträchtigt und die Verlustarbeit im Betriebseinsatz andererseits auch nicht wesentlich erhöht.

Demgemäß ergibt sich durch die erfindungsgemäßen Einprägungen der Vorteil, daß deren Positionen in Abhängigkeit der beim Einsatz des eingebauten Schlauchs vorgesehenen Beanspruchung ausgewählt und insbesondere nur bzw. vermehrt in den hierbei übermäßig belasteten Teilbereichen des Schlauchs vorgesehen werden können. Das heißt also, daß die Einprägungen beispielsweise nur in dem Teilbereich des Schlauches vorgesehen sein können, die besonders starken Schwingungen bzw. Auslenkungen unterworfen sind, während in den weniger beanspruchten Teilbereichen die vorhandenen Polygonkanten für die funktionsgerechte Schwingungsentkopplung ausreicht.

Somit kann man durch die Einprägungen eine über Umfang oder Länge unterschiedliche Verteilung der in gegenseitiger Anlage befindlichen und hierdurch geräuschreduzierten Schlauchbereiche erhalten. Gleichzeitig kann man bei entsprechender Verstärkung der Einprägungen auch die Schlaucheigenschaften lokal ändern, also beispielsweise sogar die Beweglichkeit in Teilbereichen herabsetzen, um so ein an den jeweiligen Einsatzfall optimal anpaßbares Schwingungs- und Bewegungsverhalten des Agraffschlauches zu erhalten.

Eine weitere Variante ergibt sich hierbei dadurch, daß die radiale Tiefe der Einprägungen in Abhängigkeit der beim Einsatz des eingebauten Schlauches vorgesehenen Beanspruchung ausgewählt ist, und daß die Einprägungen in den übermäßig belasteten Teilbereichen tiefer als diejenigen in den restlichen Schlauchbereichen ausgebildet sind, also beispielsweise einerseits nur zwei benachbarte Falzlagen und andererseits alle benachbarten Falzlagen beaufschlagen können, wobei das Beaufschlagen nur aus einer gegenseitigen Anlage oder aber auch aus einer sickenartigen Verformung der Falzlagen bei gleichzeitiger Unterbindung der Umfangsbeweglichkeit erfolgen kann.

Was die Anordnung der Einprägungen betrifft, so können diese beispielsweise in Reihen sich axial, radial über den Umfang oder schraubengangförmig erstreckend oder auch einfach nur stochastisch verteilt angeordnet sein.

Einfluß hierauf hat beispielsweise das Herstellungsverfahren, also die Art der Aufbringung der Einprägungen: Insbesondere für endlose Meterware empfiehlt sich das kontinuierliche Aufbringen der Einprägungen in axialer oder schraubengangförmiger Richtung, wodurch sich demgemäß auch eine axiale Gleichverteilung ergibt; werden die Einprägungen jedoch erst später bei dem bereits abgelängten konfektionierten Schlauchabschnitt vorgesehen, so läßt sich hierbei der kritische Teilbereich des Schlauches berücksichtigen und demgemäß die Einprägungsanzahl, -form oder -tiefe hieran ungleichmäßig verteilt über Schlauchumfang oder -länge vorsehen.

Eine besonders vorteilhafte Ausführungsform bezüglich der Form und Orientierung der Einprägungen besteht darin, daß bei einem Schlauch mit rundem Querschnitt von außen eine Sicke eingebracht wird, die in einem Winkel von 90° relativ zur Wicklungssteigung, also nicht wie sonst üblich parallel zur Schlauchachse, verläuft. Eine solche steigungskonforme Sicke, die vorzugsweise bei jeder Wicklung einmal über die volle Wicklungsbreite, aber nicht fluchtend zu den Sicken benachbarter Wicklungen vorgesehen sein sollte, dient als Verdrehsicherung bis zum Montieren des Schlauches, beeinträchtigt auf der anderen Seite aber nicht die Beweglichkeit der Agraffen. Durch den Wickelvorgang werden in diesem Fall nur sehr geringe verfahrensbedingte künstliche Spannungen erzeugt; außerdem kann der Schlauch mit sehr kleinen Verstellkräften hergestellt werden, da die Kontaktfläche in dem gesickten Agraffbereich kleiner als bei herkömmlich gesickten Schläuchen ist.

Weitere Merkmale und Vorteile der vorliegenden Erfindung ergeben sich aus den nachfolgenden Beschreibungen von Ausführungsbeispielen anhand der Zeichnungen; hierbei zeigen
- Figuren 1-4: jeweils unterschiedliche Einprägungsformen und -muster bei einem Agraffschlauch in teilweise geschnittener Seitenansicht;
- Figur 5: eine Seitenansicht eines Agraffschlauches mit über Umfang und Länge ungleichmäßiger Einprägungsverteilung;
- Figur 6: ein Detail eines Radialschnitts durch einen mit einer Einprägung von innen versehenen Schlauchbereich;
- Figur 7: einen Schlauchbereich in einer Ansicht gemäß Figur 6 mit einer Einprägung von außen;
- Figur 8: ein Anwendungsbeispiel eines in ein Schlauchgelenk eingebauten Agraffschlauches in teilweise geschnittener Seitenansicht und
- Figur 9: eine teilweise geschnittene Seitenansicht eines Schlauches mit alternativem Einprägungsprofil.

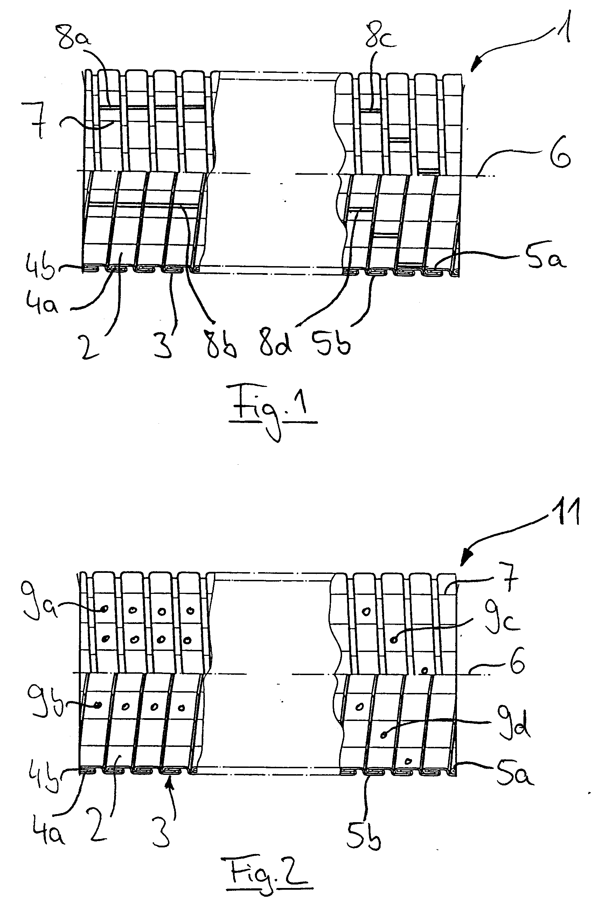

In Figur 1 ist ein Agraffschlauch 1 dargestellt, der durch schraubengangförmiges Wickeln eines S-förmigen Metallbandes 2 hergestellt ist, wobei die Bandkanten benachbarter Bandwindungen über Falze 3 aneinander festgelegt sind. In diesen Falzen liegen die durch die S-förmige Vorformung gebildeten Schenkel 4a, 4b sowie die endständigen Falzborde 5a, 5b in Radialrichtung hintereinander, wodurch sich im Beispiel aus Figur 1 pro Falz vier Lagen ergeben.

Der Agraffschlauch 1 aus Figur 1 weist darüber hinaus eine Vielzahl von sich parallel zur Schlauchachse 6 erstreckenden Polygonkanten 7 auf, durch die die Neigung des Agraffschlauches zum Abwickeln bzw. Rückspringen reduziert bzw. beseitigt wird. Außerdem werden im Bereich der Polygonkanten die einzelnen Falzlagen so gegeneinander verformt, daß sie in definierte gegenseitige Anlage gelangen.

Zur Erzielung der vorstehend geschilderten Vorteile der Geräuschreduzierung wird nun der Agraffschlauch 1 mit verschiedenen Arten und Anordnungen von Einprägungen versehen, nämlich im Beispiel aus Figur 1 links oben mit mehreren von der Schlauchaußenseite sich radial nach innen erstreckenden, in parallel zur Schlauchachse verlaufenden Reihen angeordneten Einprägungen 8a, in Figur 1 links unten mit auf der Innenseite linienförmig angeordneten Einprägungen 8b, in Figur 1 rechts oben mit auf der Außenseite angeordneten schraubengangförmig über den Umfang verteilten Einprägungen 8c sowie in Figur 1 rechts unten mit auf der Schlauchinnenseite schraubengangförmig angeordneten Einprägungen 8d. Jede der Einprägungen 8a - 8d hat für sich eine Länge, die der Breite der Falze 3 entspricht und erstreckt sich somit jeweils linienförmig über einen Falz.

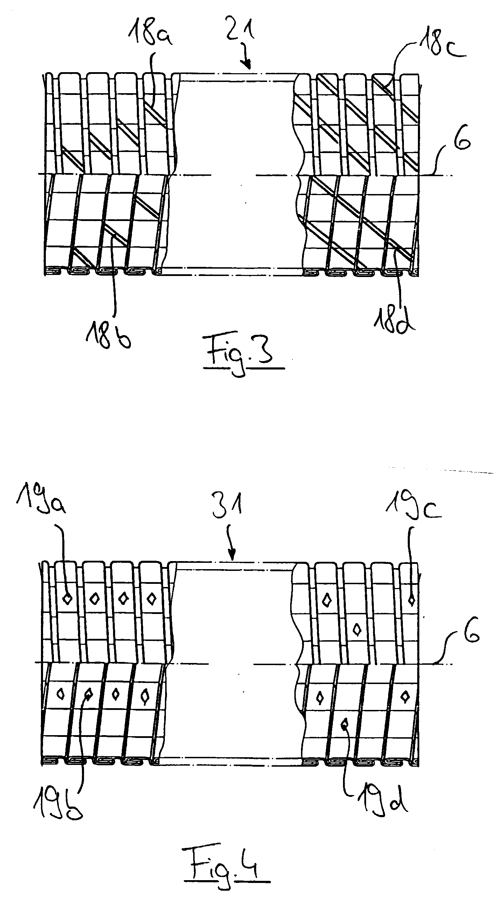

In Figur 2 ist der gleiche Schlauch als Schlauch 11 mit Einprägungen 9a - 9d versehen, die ähnlich den linienförmigen Einprägungen 8a - 8d angeordnet sind, jedoch nur punktförmig ausgebildet sind. Ansonsten entsprechen sich der Schlauch 1 aus Figur 1 und der hier vorliegende Schlauch 11 aus Figur 2 in den Einzelheiten, weshalb diese auch mit denselben Bezugszeichen versehen sind.

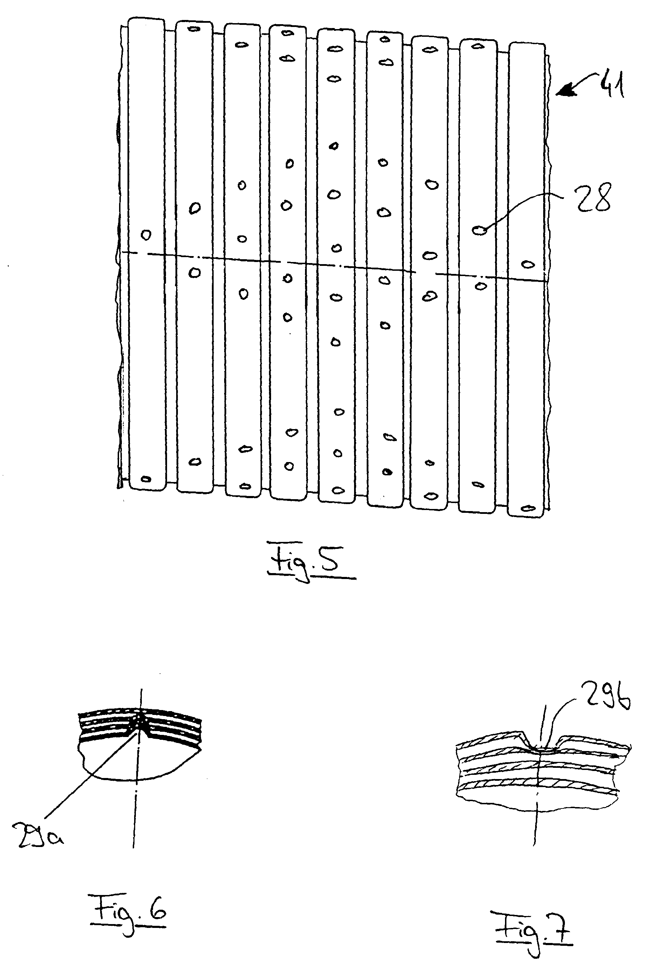

In Figur 3 ist ein Agraffschlauch 21 gezeigt mit wiederum linienförmigen Einprägungen 18a - 18d, die geneigt zur Schlauchachse 6 angeordnet über den Umfang verteilt sind und zwar als Einprägungen 18a (links oben) auf der Außenseite und versetzt zueinander angeordnet, als Einprägungen 18b (links unten) auf der Innenseite und versetzt zueinander angeordnet, als Einprägungen 18c (rechts oben) auf der Außenseite miteinander fluchtend unter Bildung mehrerer schraubengangförmiger Einprägungsreihen und als Einprägungen 18d (rechts unten) auf der Innenseite des Schlauches und ebenfalls in fluchtender Anordnung.

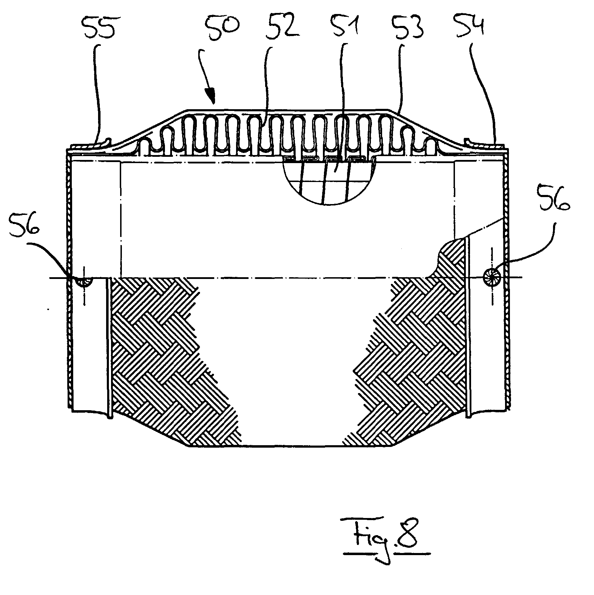

Figur 4 zeigt bei einem Schlauch 31 Einprägungen 19a - 19d, die rautenförmig ausgebildet sind und jeweils in der Mitte eines sich zwischen zwei Polygonkanten erstreckenden Falzfeldes und zwar wiederum in Form von Einprägungen 19a (links oben) auf der Schlauchaußenseite in zur Schlauchachse 6 parallelen Reihen angeordnet, als Einprägungen 19b (links unten) auf der Schlauchinnenseite in zur Schlauchachse 6 parallelen Reihen angeordnet, als Einprägungen 19c (rechts oben) stochastisch auf der Schlauchaußenseite verteilt und als Einprägungen 19d (rechts unten) stochastisch auf der Schlauchinnenseite verteilt.

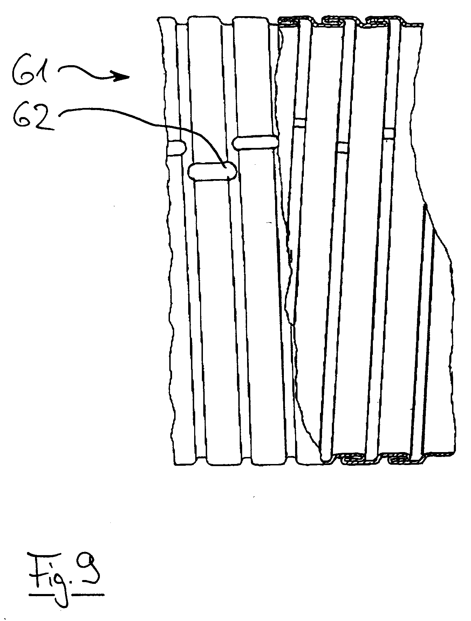

In Figur 5 ist ein Schlauch 41 in Seitenansicht dargestellt, der mit punktförmigen Einprägungen 28 versehen ist, die in Anzahl und Verteilung zur Mitte des gezeigten Axialabschnittes hin zunehmen, wodurch sich in diesem Mittelabschnitt insgesamt mehr Anlagebereiche mit zumindest punktueller gegenseitiger Anlage der benachbarten Falzlagen ergeben als in den hiervon beabstandeten axialen Randbereichen. Durch eine solche Ungleichverteilung der Einprägungen läßt sich ein ungleichmäßiges Bewegungsverhalten des Agraffschlauches 41 erzeugen, was sich beispielsweise bei unterschiedlich stark beanspruchten Leitungsabschnitten ausnutzen läßt. Denn versieht man den starken Schwingungen oder Auslenkungen unterworfenen Schlauchabschnitt mit ausreichend vielen Einprägungen, läßt die weniger beanspruchten Teilbereiche aber frei von diesen Einprägungen, so wird im stark beanspruchten Schlauchbereich die Beweglichkeit des Schlauches erheblich, in den Randbereichen diese jedoch in keinster Weise beeinträchtigt. Hierdurch kann man die vom Schlauch aufzunehmende Relativbewegung bzw. Schwingungsentkopplung über die gesamte Schlauchlänge verteilen und erhält somit eine Vergleichmäßigung der Bewegungen und Auslenkungen.

Das heißt also, daß man bei gleichbleibender Gesamtschwingungsentkopplung die übermäßig starke Auslenkung in bestimmten Teilbereichen, also beispielsweise in der axialen Mitte, auch auf die benachbarten Randbereiche verteilt, so daß diese mit in die Aufgabe der Schwingungsentkopplung einbezogen werden. Demzufolge werden auch die Schwingungs- und Auslenkungsamplituden derart vergleichmäßigt, daß selbst das Anschlagen gegen den benachbarten Metallbalg verhindert werden kann. Als Ergebnis erhält man einen stark geräuschreduzierten Agraffschlauch mit gleichbleibenden Eigenschaften bezüglich Schwingungsentkopplung und Verlustarbeit und insgesamt gleichbleibender Beweglichkeit, die jedoch durch gleichmäßigere Verteilung über die Schlauchlänge mit einer Vergleichmäßigung der maximalen Auslenkungen einhergeht.

Die Figuren 6 und 7 zeigen beispielhafte Einprägungsformen, nämlich Einprägungen 29a, die sich von der Schlauchinnenseite radial nach außen erstrecken, und Einprägungen 29b, die sich von der Schlauchaußenseite nach radial innen erstrecken.

In Figur 8 ist ein Agraffschlauch 51 dargestellt, der in ein Schlauchgelenk 50 zusammen mit einem ihn koaxial umgebenden Metallbalg 52 sowie einem auf der Balgaußenseite angeordneten Geflechtsschlauch 53 eingebaut ist. Hierbei fungiert der erfindungsgemäß mit Einprägungen versehene Agraffschlauch 51 als den Abgasstrom durch das Schlauchgelenk richtenden Liner, während der auf der Außenseite des Agraffschlauches angeordnete Metallbalg für die Dichtigkeit des Schlauchgelenks sorgt.

Agraffschlauch 51, Metallbalg 52 und Geflechtsschlauch 53 sind endständig mit Anschlußstücken 54, 55 versehen, durch die alle drei Bauteile gegeneinander - beispielsweise durch Punktschweißungen 56 - festgelegt werden.

Schließlich ist in Figur 9 ein Agraffschlauch 61 dargestellt mit steigungskonform angeordneten Sicken 62 als auf der Außenseite angeordnete Einprägungen, die somit länglich ausgebildet sind und unter einem Winkel von 90° zur Wicklungssteigung verlaufen. Diese Sicken erstrecken sich über ein komplettes Profildach, und pro Wicklung ist eine Sicke vorgesehen. Dadurch daß die Sicken geneigt zur Schlauchachse genau senkrecht zur Wicklungsteigung verlaufen fungieren sie zwar in ausreichendem Maße als Verdrehsicherung, die das Aufdrehen des Schlauches vor dem Montieren sicherstellt, behindern auf der anderen Seite aber kaum die Beweglichkeit des montierten Schlauches.

## Patentansprüche

1. Agraffschlauch insbesondere für Abgasanlagen von Kraftfahrzeugen, schraubengangförmig gewickelt aus wenigstens einem S-förmig vorgeformten ein- oder mehrlagigen Metallband, wobei die Bandkanten benachbarter Bandwindungen miteinander verfalzt sind über ihre durch die S-Haken der Vorformung gebildeten Schenkel und endständigen Falzborde,
dadurch gekennzeichnet,
daß der Schlauch (1, 11, 21, 31, 41, 51) mit radialen, benachbarte Falzlagen (4a, 4b, 5a, 5b) partiell in gegenseitige Anlage bringenden Einprägungen (8a-8d, 9a-9d, 18a-18d, 19a-19d, 28, 29a, 29b) versehen ist.

2. Agraffschlauch nach Anspruch 1,
dadurch gekennzeichnet,
daß die Einprägungen (8a, 8c, 9a, 9c, 18a, 18c, 19a, 19c, 28, 29b) auf der radialen Außenseite des Schlauchs (1, 11, 21, 31, 41, 51) aufgebracht sind.

3. Agraffschlauch nach zumindest einem der vorstehenden Ansprüche,
dadurch gekennzeichnet,
daß die Einprägungen (8b, 8c, 9b, 9d, 18b, 18d, 19b, 19d, 29a) auf der radialen Innenseite des Schlauchs (1, 11, 21, 31) aufgebracht sind.

4. Agraffschlauch nach zumindest einem der vorstehenden Ansprüche,
dadurch gekennzeichnet,
daß die Positionen der Einprägungen (28) in Abhängigkeit der beim Einsatz des eingebauten Schlauchs (41) vorgesehenen Beanspruchung ausgewählt sind und insbesondere nur bzw. vermehrt in den hierbei übermäßig belasteten Teilbereichen des Schlauchs vorgesehen sind.

5. Agraffschlauch nach zumindest einem der vorstehenden Ansprüche,
dadurch gekennzeichnet,
daß die radiale Tiefe der Einprägungen in Abhängigkeit der beim Einsatz des eingebauten Schlauches vorgesehenen Beanspruchung ausgewählt ist, und daß insbesondere die Einprägungen in den übermäßig belasteten Teilbereichen tiefer als diejenigen in den restlichen Schlauchbereichen ausgebildet sind.

6. Agraffschlauch nach Anspruch 5,
dadurch gekennzeichnet,
daß die Einprägungen mindestens zwei und in den übermäßig belasteten Teilbereichen insbesondere vier benachbarte Falzlagen beaufschlagen.

7. Agraffschlauch nach zumindest einem der vorstehenden Ansprüche,
dadurch gekennzeichnet,
daß der Schlauch (41) einen kreisrunden Querschnitt aufweist.

8. Agraffschlauch nach zumindest einem der vorstehenden Ansprüche 1 - 6,
dadurch gekennzeichnet,
daß der Schlauch (1, 11, 21, 31, 51) mit einer Vielzahl von Polygonkanten (7) versehen ist.

9. Agraffschlauch nach Anspruch 8,
dadurch gekennzeichnet,
daß die Einprägungen (8a-8d, 9a-9d, 18a-18d, 19a-19d) beabstandet von den Polygonkanten (7) vorgesehen sind.

10. Agraffschlauch nach zumindest einem der vorstehenden Ansprüche,
dadurch gekennzeichnet,
daß die Einprägungen (8a-8d, 9a-9d, 18c, 18d, 19a, 19b) in Reihen angeordnet sind.

11. Angraffschlauch nach Anspruch 10,
dadurch gekennzeichnet,
daß sich die Reihen parallel zur Schlauchachse (6) axial erstrecken.

12. Agraffschlauch nach Anspruch 10,
dadurch gekennzeichnet,
daß sich die Reihen senkrecht zur Schlauchachse radial über den Umfang erstrecken.

13. Agraffschlauch nach Anspruch 10,
dadurch gekennzeichnet,
daß sich die Reihen schraubengangförmig erstrecken.

14. Agraffschlauch nach zumindest einem der vorstehenden Ansprüche,
dadurch gekennzeichnet,
daß die Einprägungen (19c, 19d) stochastisch über den Schlauch verteilt angeordnet sind.

15. Agraffschlauch nach zumindest einem der vorstehenden Ansprüche,
dadurch gekennzeichnet,
daß die Einprägungen während des Wickelvorgangs eingebracht sind.

16. Agraffschlauch nach zumindest einem der vorstehenden Ansprüche,
dadurch gekennzeichnet,
daß die Einprägungen nach Ablängen der einzelnen Schlauchabschnitte eingebracht sind.

17. Agraffschlauch nach zumindest einem der vorstehenden Ansprüche,
dadurch gekennzeichnet,
daß die Einprägungen (8a-8d, 18a-18d) linienförmig ausgebildet sind.

18. Agraffschlauch nach zumindest einem der vorstehenden Ansprüche,
dadurch gekennzeichnet,
daß die Einprägungen (9a-9d, 19a-19d, 28) punktförmig ausgebildet sind.

19. Agraffschlauch nach zumindest einem der vorstehenden Ansprüche,
dadurch gekennzeichnet,
daß die Einprägungen (62) als längliche Sicken ausgebildet sind, und daß die Haupterstreckungsrichtung der Sicken steigungskonform und somit in einem Winkel von etwa 90° zur Wicklungssteigung verläuft.
